# EUROPÄISCHE PATENTSCHRIFT

(11) **EP 3 046 978 B1**
(45) Veröffentlichungstag und Bekanntmachung des Hinweises auf die Patenterteilung: **01.03.2017**
(21) Anmeldenummer: 14784403.9
(22) Anmeldetag: 16.09.2014
(51) Int. Cl.: C09D 11/18

(54) **PASTENZUBEREITUNG FÜR SCHREIBGERÄTE**
PASTE PREPARATION FOR WRITING INSTRUMENTS
PRÉPARATION DE PÂTE POUR INSTRUMENT D'ÉCRITURE

(30) Priorität: 16.09.2013 DE 202013008203 U
(43) Veröffentlichungstag der Anmeldung: 27.07.2016
(73) Patentinhaber: Stabilo International GmbH, 90562 Heroldsberg (DE)
(72) Erfinder: AßMANN, Nicole, 90491 Nürnberg (DE); SCHWERTFEGER, Marcus, 90409 Nürnberg (DE); SPENGLER, Thomas, 91235 Velden (DE); SCHERER, Beate, 92364 Deining (DE)
(74) Vertreter: Leissler-Gerstl, Gabriele
(86) Internationale Anmeldenummer: PCT/EP2014/069717
(87) Internationale Veröffentlichungsnummer: WO 2015/036621

(56) Entgegenhaltungen:
- WO-A1-2010/052729
- DE-A1- 19 827 710
- US-A1- 2011 097 134

## Beschreibung

Die Erfindung betrifft eine nichtwässrige Kugelschreiberpaste.

Ein Kugelschreiber ist ein Schreibgerät, der in der Schreibspitze seiner Mine eine kleine rollende Kugel aufweist, die eine Farbmasse, die in der Mine enthalten ist, auf das Schreibpapier überträgt. Die Kugel bewegt sich bei einer Schreibbewegung und verschließt die Farbmine, wenn sie stillsteht. Die Farbmasse besteht im Allgemeinen aus einer viskosen Masse, die unter anderem organische Farbstoffe und ein Polymer gelöst in einem organischen Lösungsmittel enthält. Um funktionsfähig zu sein, sollte die Kugelschreiberpaste eine Viskosität im Bereich von ca. 2 bis 20 Pa·s bei 20°C haben. Die Oberflächenspannung sollte mindestens 40 dyn/cm betragen, damit das Auslaufen und Herauskriechen der Paste aus dem Kugelspalt verhindert wird. Aus dem Stand der Technik bekannt ist es, als Pigmente für Kugelschreiberpasten mit Olein aufgeschlossene kationische Farbstoffe zu verwenden, insbesondere Phthalocyaninfarbstoffe. Weitere Farbstoffe können hinzukommen, um einen gewünschten Farbton einzustellen. Die Regulierung der Viskosität erfolgt in der Regel mit einem in Benzylalkohol oder einem höheren Glycol gelösten Harz, z.B. Phthalatharz, Formaldehydharz etc. Verdickungsmittel, wie Polyvinylpyrrolidon, können verwendet werden. Wenn die Paste zu hochviskos ist, wird sie nicht gut und glatt übertragen und lässt sich schwer schreiben. Wenn die Viskosität zu gering ist, besteht das Problem, dass Tinte am Kugelspalt austreten kann und Kleckse erzeugt, die beim Darüberfahren verschmieren. Außerdem kann ein hoher Lösungsmittelgehalt oder ein zu hoher Gehalt an niedrigsiedenden Lösungsmitteln dazu führen, dass die Tinte zu tief in das Papier eindringt oder durchschlägt. Ein zu hoher Gehalt an hochsiedendem Lösungsmittel führt dazu, dass die Tinte nicht schnell genug trocknet.

Wie oben erwähnt, wird zur Erzeugung der geeigneten Konsistenz für Kugelschreiberpasten in der Regel ein Polymer verwendet. Häufig werden hierzu auf Formaldehyd basierende Harze eingesetzt. Formaldehyd kann gesundheitliche Schädigungen hervorrufen und daher ist es notwendig, auf Formaldehyd basierende Harze so aufzubereiten, dass möglichst wenig freies Formaldehyd enthalten ist. Hierzu sind aufwändige Verfahren erforderlich. Auf die Verwendung von Formaldehyd abspaltenden Verbindungen sollte verzichtet werden.

Weiterhin ist aus EP 1 275 704 bekannt, Harze mit niedrigem oder hohem Molekulargewicht zu verwenden, wobei die Einstellung der Viskosität sowohl durch die Art des Harzes als auch durch die Art und Menge des Lösungsmittels erfolgt. Beispiele für Harze werden genannt, wie z.B. Ketonharze, Styrolharze, phenolbasierte Harze als Harze mit niedrigem Molekulargewicht und Polyvinylpyrrolidon, cellulosebasierte Harze und Polyvinylbutyral als Harze mit hohem Molekulargewicht, wobei von den Harzen mit hohem Molekulargewicht PVP als besonders geeignet angesehen wurde.

Wesentlich für die Paste gemäß EP 1 275 704 ist die Verwendung von 3-Methoxy-3-methylbutanol als Hauptlösungsmittel. Weitere Lösungsmittel können in einem kleineren Anteil enthalten sein, z.B. üblicherweise in Pastenmassen verwendete ein- und mehrwertige Alkohole mit kürzeren oder längeren Ketten.

Nachteil der bekannten Tinten ist, dass sie in der Regel mindestens einen gesundheitsschädlichen Inhaltsstoff enthalten. Übliche Inhaltsstoffe für Kugelschreiberpasten sind z.B. das Lösungsmittel Benzylalkohol, das gesundheitsschädlich ist bei Verschlucken oder Einatmen, das verdickend wirkende 2-Phenoxyethanol, das gesundheitsschädlich bei Verschlucken ist, oder das leichtflüchtige Lösungsmittel Cyclohexan, das beim Verschlucken und Eindringen in die Atemwege tödlich sein kann.

Probleme können auch die Farbstoffe beitragen. Ihr Anteil muss so hoch sein, dass ein farbtiefer Auftrag erzielt werden kann. Darüberhinaus muss sich der Farbstoff in einem für eine Kugelschreiberpaste geeigneten Lösungsmittel lösen und muss mit den anderen Bestandteilen kompatibel sein. Es wurde gefunden, dass der häufig für Kugelschreiber verwendete Farbstoff Solvent Violet 8 als gesundheitsschädlich einzustufen ist. Ein weiterer bekannter Farbstoff, Solvent Blue 38 ist in der üblicher Weise eingesetzten Form ebenfalls bedenklich.

Kugelschreiberpasten müssen hohe Anforderungen in Bezug auf Biokompatibilität erfüllen, da sie mit dem menschlichen Körper in Berührung kommen. Es ist daher eine Aufgabe, eine Kugelschreiberpaste bereitzustellen, die möglichst keine schädlichen, z.B. toxischen Inhaltsstoffe aufweist. Insbesondere soll eine Kugelschreiberpaste bereitgestellt werden, die keine beim Einatmen oder Verschlucken gesundheitsschädlichen Inhaltsstoffe enthält. Darüber hinaus war es Aufgabe, eine Paste bereitzustellen, die ein weiches Schreibgefühl vermittelt, ein gutes Anschreibverhalten hat, eine hohe Wischfestigkeit und gute Wasserfestigkeit besitzt und sowohl bei tiefen als auch hohen Temperaturen einsetzbar ist.

Diese Aufgabe wird gelöst mit einer Kugelschreiberpaste, wie in den Ansprüchen definiert. Die erfindungsgemäße Kugelschreiberpaste enthält nur gesundheitlich unbedenkliche Bestandteile und liefert trotzdem vorteilhafte Eigenschaften, wie ein weiches Schreibgefühl und ein gutes Anschreibverhalten. Außerdem liefert trotz der verringerten Löslichkeit des Farbstoffs die Paste eine hohe Lichtechtheit, eine hohe Farbstärke und einen brillanten Farbton.

Die guten Eigenschaften der Kugelschreiberpaste werden durch die spezielle Kombination der Inhaltsstoffe erzielt, insbesondere durch die Kombination aus einem gesundheitlich unbedenklichen Farbstoff mit kompatiblen Lösungsmitteln und einem unschädlichen Polymerverdicker. Die einzelnen Komponenten werden im folgenden ausführlich erläutert.

Eine übliche Kugelschreiberpaste enthält mindestens einen Farbstoff, mindestens ein Lösungsmittel bzw. ein Lösungsmittelgemisch zur Lösung des Farbstoffs, sowie mindestens ein Polymer und ggf. ein Bindemittel zur Einstellung der Viskosität.

Farbstoffe, die für Kugelschreiberpasten verwendet werden, müssen eine hohe Farbstärke und hohe Lichtechtheit aufweisen. Die häufig verwendeten Farbstoffe haben jedoch das Problem, dass sie als gesundheitsschädlich gekennzeichnet sind, d.h. bei Verschlucken oder Einatmen auf den Organismus eine schädliche Wirkung ausüben. Da bei Kugelschreiberpasten die Möglichkeit besteht, dass sie mit der Haut oder Schleimhaut in Kontakt kommen oder verschluckt werden, soll dieses Risiko vermieden werden.

Ein bekannter dunkel-blaugrüner Farbstoff ist Solvent Blue 38 auch als Fast Blue MBS bezeichnet, das Diarylguanidinsalz eines sulphonierten Kupfer-phthalocyanins: Trihydrogen-[29H,31H-phthalocyanintrisulphonato(5-)-N29,N30,N31,N32]cuprate(3-), mit N,N'-di(o-tolyl)guanidin (1:3) In dieser Form weist er geeignete Lösungseigenschaften auf, um in übliche Trägermassen für Kugelschreiberpaste eingearbeitet zu werden. Allerdings ist das zur Stabilisierung verwendete N,N'-di(o-tolyl)guanidin als akut toxisch eingestuft. Es wurde nun überraschenderweise gefunden, dass statt dieses bekannten Farbstoffs eine Variante von Solvent Blue 38, bevorzugt CAS 1328-51-4, verwendet werden kann, die aufgrund der Zusammensetzung gesundheitlich unbedenklich ist und in Kombination mit den erfindungsgemäß definierten Lösungsmitteln eine sehr gut schreibfähige Paste liefert und daher ohne Probleme eingesetzt werden kann und eine Lichtechtheit; Brillanz und Farbstärke wie andere bekannte Farbstoffe aufweist. Es handelt sich um ein Alkalisalz des Kupfer-phthalocyaninfarbstoffs, C₃₂H₁₂CuN₈Na₂O₆S₂. Als Alkaligegenionen können die üblicherweise verwendeten Ionen verwendet werden, wie Kalium- und/oder Natriumionen. Bevorzugt wird das Natriumsalz, insbesondere Di-Natriumsalz, verwendet, das unter verschiedenen Namen im Handel erhältlich ist, z.B. von Sigma-Aldrich unter der Bezeichnung Luxol Solvent Blue 38. Dieser Farbstoff ist in Methanol löslich, Methanol ist als niedrigsiedendes Lösungsmittel aber zur Herstellung von Kugelschreiberpasten nicht geeignet, unter anderem da es beim Einatmen, Verschlucken und bei Hautkontakt giftig ist.

Wichtiger Bestandteil der erfindungsgemäßen Kugelschreiberpaste ist daher ein Alkalisalz, bevorzugt Di-Natriumsalz von Solvent Blue 38 als Farbstoff.

Wesentlich für die erfindungsgemäße Kugelschreiberpaste ist daher, dass diese spezielle Form des Farbstoffs eingesetzt wird. Weitere Farbstoffe können zugemischt werden, um den Farbton zu verändern, wie es dem Fachmann bekannt ist. Bevorzugt werden für die Zumischung ebenfalls Farbstoffe ausgewählt, die weder gesundheits- noch umweltschädlich sind.

In einer bevorzugten Ausführungsform wird Solvent Blue 38, CAS 1328-51-4 alleine verwendet.

Weiterer wichtiger Bestandteil der erfindungsgemäßen Kugelschreiberpaste ist das zur Einstellung der Konsistenz/Viskosität verwendete Polymer. Hierzu wird erfindungsgemäß Polyvinylbutyral verwendet. Polyvinylbutyral ist im Handel erhältlich mit verschiedenen Molmassen. Es hat sich gezeigt, dass Polyvinylbutyral mit einer gewichtsmittleren Molmasse M_{w} (g/mol) im Bereich von 30.000 bis 80.000 geeignet ist. Bevorzugt wird Polyvinylbutyral mit einer gewichtsmittleren Molmasse im Bereich von 40.000 bis 75.000 g/mol, besonders bevorzugt im Bereich von 45.000 bis 70.000 g/mol eingesetzt. Polyvinylbutyral ist mit dem erfindungsgemäß verwendeten Farbstoff kompatibel und liefert eine stabile Paste.

Weiterer wichtiger Bestandteil der erfindungsgemäßen Paste ist eine Lösungsmittelkomponente, die mindestens ein Lösungsmittel, bevorzugt ein Lösungsmittelgemisch aufweist, die den Farbstoff lösen kann, ohne gleichzeitig den polymeren Verdicker zu dünnflüssig zu machen oder aufquellen zu lassen und selbst unbedenklich ist. Ein für den Einsatz in einer Kugelschreiberpaste geeignetes Lösungsmittel darf nicht leichtflüchtig sein, muss jedoch so flüchtig sein, dass die Tinte nach dem Abgeben schnell trocknet. Wenn das Lösungsmittel zu flüchtig ist, entweicht es aus der Mine, sodass die Paste nicht mehr schreibfähig ist. Außerdem muss das Lösungsmittel bzw. Lösungsmittelgemisch den Farbstoff lösen können und mit dem zur Einstellung der Viskosität verwendeten Harz kompatibel sein. Außerdem darf das Lösungsmittel nicht toxisch oder gesundheitsschädlich sein, da die Tinte mit Haut und Schleimhaut in Kontakt kommen kann und außerdem verschluckt werden kann. Die Auswahl geeigneter organischer Lösungsmittel ist daher schon sehr eingeschränkt. Üblicherweise für Kugelschreiberpasten verwendete Lösungsmittel sind Benzylalkohol, das augenreizend und beim Verschlucken oder Einatmen gesundheitsschädlich ist, und Cyclohexan, das beim Verschlucken und Eindringen in die Atemwege tödlich sein kann.

Es wurde gefunden, dass Diacetonalkohol die obigen Bedingungen erfüllt, wenn es mit einem Alkalisalz von Solvent Blue 38, wie oben definiert, und Polyvinylbutyral, wie oben definiert, kombiniert wird. Diese Kombination liefert eine geschmeidige Masse, die auch bei höheren Temperaturen, z.B. 50°C stabil bleibt, sodass eine daraus hergestellte Minenmasse auch in heißen Ländern schreib- und lagerfähig ist.

Erfindungsgemäß enthält daher die Lösungsmittelkomponente mindestens Diacetonalkohol. Es wurde gefunden, dass Diacetonalkohol besonders gut geeignet ist, um Solvent Blue 38 mit der oben angegebenen Spezifikation zu lösen und darüber hinaus mit dem als Harz verwendeten Polymer gut kompatibel ist. Diacetonalkohol, oder auch 4-Hydroxy-4-methylpentan-2-on, ist ein Lösungsmittel mit einem Siedepunkt von 166°C, das somit ausreichend hoch siedet, sodass keine Probleme mit der Stabilität der Paste entstehen. Diacetonalkohol kann als alleiniges Lösungsmittel in den erfindungsgemäßen Kugelschreiberpasten verwendet werden, da es den Farbstoff in ausreichender Menge lösen kann.

Diacetonalkohol hat einen Dampfdruck von 1,2 hPa bei Raumtemperatur und ist daher besonders gut als Lösungsmittel für die erfindungsgemäße Kugelschreiberpaste geeignet, da es auch bei 50°C und Normaldruck im Wesentlichen nicht verdunstet, den Farbstoff lösen kann und trotzdem mit dem außerdem vorhandenen Polymer kompatibel ist.

Bevorzugt enthält die Lösungsmittelkomponente ein Lösungsmittelgemisch, d.h. zusätzlich zu Diacetonalkohol mindestens ein weiteres Lösungsmittel, bevorzugt ein oder zwei zusätzliche, mit Diacetonalkohol kompatible Lösungsmittel.

Ein gut geeignetes weiteres Lösungsmittel ist Hexylenglycol, auch als 2,4-Dihydroxy-2-methylpentan bezeichnet. Hexylenglycol mischt sich mit Diacetonalkohol in jedem beliebigen Verhältnis, sodass auch Mischungen dieser beiden Lösungsmittel in jedem beliebigen Verhältnis verwendet werden können.

Eine Mischung von Diacetonalkohol und Hexylenglycol in einem Verhältnis von 10:1 bis 1:10, bevorzugt 5:1 bis 1:2 hat sich als besonders geeignet erwiesen.

Weitere für die erfindungsgemäße Paste geeignete Lösungsmittel sind β-alkylierte Alkohole mit einer Kettenlänge im Bereich von 6 bis 12 C-Atomen, wobei die β-verzweigte Alkylkette eine Länge im Bereich von 4 bis 14 C-Atomen haben kann. Diese Verbindungen sind auch als Guerbetalkohole bekannt. Besonders bevorzugt aus dieser Verbindungsklasse ist Octyldodecanol, das z.B. von der Firma Sasol unter der Bezeichnung Isofol 20 vertrieben wird. Octyldodecanol ist ein Lösungsmittel, das praktisch nicht verdampft, das weder für die Haut oder Schleimhaut noch für die Umwelt gefährlich ist und gute Lösungseigenschaften aufweist.

Viele im Stand der Technik bekannte Kugelschreiberpasten enthalten 2-Phenoxyethanol als die Viskosität erhöhendes Mittel. 2-Phenoxyethanol ist jedoch gesundheitsschädlich beim Verschlucken und seine Verwendung sollte vermieden werden, insbesondere in den Mengen, in denen es in einer Kugelschreiberpaste eingesetzt werden muss, um die gewünschten Eigenschaften zu erzielen.

Mit den Inhaltsstoffen der erfindungsgemäßen Paste sind übliche Glycole/Polyglycole und Glycolether/Polyglycolether kompatibel und können daher zusätzlich zu den obengenannten Lösungsmitteln und/oder als die Viskosität beeinflussende Mittel der erfindungsgemäßen Paste zugefügt werden. Bevorzugt wird ein Mischpolymerisat aus Polyethylenoxid und Polypropylenoxid verwendet. Die Verwendung von 2-Phenoxyethanol kann dadurch vermieden werden.

Es wurde gefunden, dass in einer Paste, die ein Alkalisalz von Solvent Blue 38 als Farbstoff enthält und Diacetonalkohol und/oder Hexylenglycol als Lösungsmittel enthält, Polyethylenoxid/Polypropylenoxid-Mischpolymerisat zur Verdickung geeignet ist und daher das unerwünschte 2-Phenoxyethanol ersetzen kann. Geeignete Ethylenoxid-Propylenoxid-Mischpolymerisate werden von Clariant unter der Bezeichnung Polyglycol P41 vertrieben. Ein besonders geeignetes Polyglycol ist Polyglycol P41/3000 mit einer gewichtsmittleren Molmasse im Bereich von 15.000 g/mol.

In einer besonders bevorzugten Ausführungsform wird eine Kugelschreiberpaste bereitgestellt, die statt dem herkömmlichen Benzylalkohol-Phenoxyethanol-Gemisch ein Gemisch aus Hexylenglycol und/oder Diacetonalkohol mit Octyldodecanol und/oder Polyglycol enthält. Bei Verwendung dieser spezifischen Lösungsmittel bzw. Verdickungsmittel kann die Konsistenz der Paste in geeigneter Weise eingestellt werden. Die erhaltene Zusammensetzung ist stabil, zeigt ein sehr gutes Strichverhalten und eine gute Lagerfähigkeit. Darüber hinaus liefert die Zusammensetzung beim Schreiben vorteilhafte Eigenschaften, sie schreibt leicht an und das erhaltene Schriftbild ist deutlich, nicht verschmiert, farbecht mit einem brillanten Farbton.

Die erfindungsgemäße Kugelschreiberpaste kann darüber hinaus noch weitere Hilfs- und Zusatzstoffe enthalten, wie es dem Fachmann auf diesem Gebiet bekannt ist. Beispiele sind grenzflächenaktive Substanzen, Sauerstoff- und/oder Radikalfänger, Lichtschutzmittel, Farbaufheller, Fotosensibilisatoren, Additive zur Beeinflussung rheologischer Eigenschaften, wie z.B. Thixotropiemittel, Verdickungs- und/oder Eindickungsmittel, Verlaufmittel, Entschäumer, Antistatika, Gleitmittel, Netz- und Dispergiermittel, thermoplastische Additive, Weichmacher und/oder Mattierungsmittel.

Die erfindungsgemäße Zusammensetzung benötigt keine Konservierungsmittel, d.h. sie bleibt stabil ohne Zusatz von Konservierungsmitteln. Falls gewünscht, können Konservierungsmittel natürlich zugesetzt werden.

In einer bevorzugten Ausführungsform wird darüber hinaus der Kugelschreiberpaste ein Weichmacher zugemischt, um die Stabilität weiter zu erhöhen. Um ein besonders umweltfreundliches und gesundes Produkt herzustellen, soll auf die Verwendung von Phthalatweichmachern verzichtet werden. Als geeignet für die erfindungsgemäße Paste hat sich 1,2-Cyclohexandicarbonsäurediisononylester erwiesen, das unter der Bezeichnung Hexamoll^{®} Dinch im Handel erhältlich ist von BASF.

Ein weiterer für die erfindungsgemäße Paste geeigneter Weichmacher ist ein Ester aus Adipinsäure und mehrwertigen Alkoholen, der unter der Bezeichnung Palamoll von der Firma BASF im Handel erhältlich ist.

Die erfindungsgemäße Kugelschreiberpaste enthält bevorzugt die wesentlichen Bestandteile in den folgenden Mengen:
Farbstoff: Der Farbstoff Solvent Blue 38 wird in einer solchen Menge eingesetzt, dass beim Schreiben ein Strich mit Farbtiefe entsteht. Eine geeignete Menge liegt im Bereich von 5 bis 15, bevorzugt 6 bis 12 Gew.-%.

Polymer: Das als Konsistenzmittel und Viskosität erzeugende eingesetzte Polymer wird in einer solchen Menge verwendet, dass die Paste die geeignete Konsistenz hat, um aus einer Kugelschreibermine abgegeben werden zu können, sich leicht abschreiben lässt und auch ein gutes Anschreibverhalten zeigt. Hierzu ist eine Menge von 5 bis 15 Gew.-%, bevorzugt 6 bis 12 Gew.-% geeignet.

Lösungskomponente: Die Menge an Lösungsmittel bzw. Lösungsmittelgemisch, das zur Lösung des Farbstoffs eingesetzt wird, liegt in einem Bereich zwischen 85 und 60 Gew.-%. Es kann ein einziges Lösungsmittel eingesetzt werden, z.B. Diacetonalkohol oder Hexylenglycol. Ebenso ist es möglich, ein Lösungsmittelgemisch, das aus zwei oder mehr Lösungsmitteln besteht, zu verwenden. Ein Gemisch aus Diacetonalkohol und Hexylenglycol in einem Verhältnis von 10:1 bis 1:10 hat sich als geeignet erwiesen.

Ein weiterer fakultativer Bestandteil ist eine weichmachende Verbindung, die abhängig von der Art des Weichmachers in an sich bekannter Menge eingesetzt werden kann. Für die bevorzugten Weichmacherverbindungen, die oben genannt wurden, hat sich eine Menge von 3 bis 10 Gew.-%, bevorzugt 5 bis 9 Gew.-% als vorteilhaft erwiesen.

Weitere Hilfs- und Zusatzstoffe können zugesetzt werden und werden in den üblicherweise verwendeten Mengen zugegeben.

Die Erfindung wird durch die folgenden Beispiele erläutert.

### Beispiel 1

Es wurden erfindungsgemäße Rezepturen und Vergleichsrezepturen hergestellt, deren Schreibeigenschaften anschließend getestet wurden.

Zunächst wurden Löslichkeitsversuche durchgeführt. Dazu wurde die Löslichkeit von Solvent Blue 38 CAS 7298-60-0 (Diarylguanidiniumsalz) (im folgenden SB38 GUA) im Vergleich zu Solvent Blue 38 CAS: 1328-51-4 (Di-Natriumsalz) (im folgenden SB38 DiNa) analysiert. Dazu wurden Lösungsversuche der beiden Farbstoffe mit den Lösungsmitteln Phenoxyethanol, Diacetonalkohol, Benzylalkohol und Mischungen durchgeführt. Das erfindungsgemäße Solvent Blue 38 SB38 DiNa zeigt zwar gegenüber SB38 GUA keine verbesserten Löseeigenschaften, weder in den erfindungsgemäßen Lösemitteln, noch in den Standardlösemitteln, bzw. dem üblich verwendeten Lösemittelgemisch Benzylalkohol und Phenoxyethanol, löst sich aber in den erfindungsgemäßen Lösungsmittelkomponenten ausreichend, sodass eine stabile Masse mit guten Eigenschaften erhalten werden kann.

Es wurden 5 verschiedene auf SB38 DiNa basierende Rezepturen erstellt:

| **Komponente** | **A** | **II** | **III** | **IV** | **V** |
|---|---|---|---|---|---|
| **Solvent Blue 38** | **5,7** | **5,7** | **5,7** | **5,7** | **5,7** |
| **Diacetonalkohol** | **57,5** | **0** | **57,5** | **57,5** | **57,5** |
| **Benzylalkohol** | **0** | **57,5** | **0** | **0** | **0** |
| **Polyvinylbutyral** | **10,2** | **10,2** | **10,2** | **0** | **10,2** |
| **Ethylcellulose** | **0** | **0** | **0** | **10,2** | **0** |
| **Hexylenglycol** | **8,9** | **8,9** | **0** | **8,9** | **8,9** |
| **Phenoxyethanol** | **0** | **0** | **8,9** | **0** | **0** |
| **β**-**alkylierter Alkohol** | **8,9** | **8,9** | **8,9** | **8,9** | **0** |
| **Decanol** | **0** | **0** | **0** | **0** | **8,9** |
| **Polyethylenglycol** | **3,6** | **3,6** | **3,6** | **3,6** | **3,6** |
| **Cyclohexandicarbonsäureester** | **5,1** | **5,1** | **5,1** | **5,1** | **5,1** |
| | **100** | **100** | **100** | **100** | **100** |

Rezeptur A ist eine erfindungsgemäße Paste. Rezeptur II enthält das im Stand den Technik häufig als Lösungsmittel verwendeten Benzylalkohol statt Diacetonalkohol. Rezeptur II enthält das im Stand der Technik häufig verwendete Viskositätsmittel Phenoxyethanol. Rezeptur IV enthält im Stand der Technik als Verdickungsmittel gebräuchliche Ethylcellulose statt Polyvinylbutyral. Rezeptur V enthält Decanol statt einem β-alkylierten Alkohol.

Während Rezeptur A eine glatte, gut schreibfähige Paste liefert, zeigt Rezeptur II Probleme beim Anschreiben und zieht Fäden, liefert Rezeptur III Anschreibprobleme bei handschriftlichem Test und einen Klecks am der Spitze am Ende, und Rezeptur IV ist insgesamt mangelhaft. Im Ansatzbehälter zeigt sich Synärese, die Paste ist schwer dosierbar und kaum fließfähig. Nach der Abfüllung kommt es zum Abtropfen der Spitze, 80% der Refills sind binnen 100 m nicht mehr schreibfähig. Rezeptur V schlägt durch.

### Beispiel 2

Die mit den obigen Rezepturen hergestellten Schreibpasten wurden in an die DIN 12757-1.5.1 angelehnten Tests auf ihre Anwendbarkeit getestet. Die Ergebnisse sind in der folgenden Tabelle zusammengefasst. Wenn nicht anders angegeben wurde für die Tests ein Linienziehgerät nach ISO 12756 verwendet.

| | Anschreibverhalten | Highlightbarkeit | Trockenzeit nach DIN 12757-6.3.3 | Durchschläge n nach DIN 12757-1 6.3.2 | Durchschläge n auf Kopierpapier (handschriftl.) |
|---|---|---|---|---|---|
| A | ++ | ++ | ++ | 0 | ++ |
| II | - | - | 0 | - | - |
| III | - | ++ | ++ | 0 | 0 |
| IV | n.a. | ++ | ++ | - | - |
| V | + | ++ | + | - | 0 |

| | | | | | |
|---|---|---|---|---|---|
| ² in Anlehnung an DIN 12757-1 5.1/Anschreiben nach 30 Min. ³ in Anlehnung an DIN 12757-1 6.3.3/STABILO BOSS Original statt Radierer nach DIN 12757-1 5.1 ⁴ in Anlehnung an DIN 12757-1/Kopierpapier statt Prüfpapier nach DIN 12757-1 5.2 ⁵80 g m⁻² Firma Navigator™ Universal Silky Touch Ultra-Bright Art. Nr. 006102 n.a. nicht auswertbar wegen Klecksen | | | | | |

Der Test "handschriftliche Untersuchung - Durchschlagen auf Kopierpapier" ist zwar nicht normgerecht, wird jedoch im Alltag häufig angewendet, da er eine gute Abschätzung der Eigenschaften zulässt und einfach durchzuführen ist.

Die aus Rezeptur A hergestellte Paste, die keine gesundheits- oder umweltschädlichen Inhaltsstoffe enthält, zeigte in jedem Test zumindest gleich gute, wenn nicht bessere Eigenschaften als die Rezepturvariationen, die wegen Gesundheits- und/oder Umweltschädlichkeit unerwünschte Bestandteile enthielten. Nur eine Zusammensetzung, die alle erfindungsgemäß wesentlichen Bestandteile enthält, zeigt diese Kombination aus Verträglichkeit und guten Schreibeigenschaften.

## Patentansprüche

1. Kugelschreiberpaste enthaltend
a) ein Farbmittel, das ein Farbstoff oder eine Mischung von Farbstoffen sein kann, wobei mindestens ein Alkalisalz von Solvent Blue 38 enthalten ist,
b) ein Lösungsmittel oder Lösungsmittelgemisch, wobei mindestens Diacetonalkohol enthalten ist,
c) ein Polymer zur Einstellung der Viskosität, das ein Polyvinylbutyralharz ist.

2. Paste nach Anspruch 1, **dadurch gekennzeichnet, dass** zusätzlich ein Weichmacher ausgewählt aus 1,2-Cyclohexandicarbonsäurediisononylester oder Estern basierend auf Adipinsäure und mehrwertigen Alkoholen, enthalten ist.

3. Paste nach Anspruch 1 oder Anspruch 2, **dadurch gekennzeichnet, dass** ein Lösungsmittelgemisch enthalten ist, das Diacetonalkohol und Hexylenglycol aufweist in einem Verhältnis von 10:1 bis 1:10, bevorzugt 5:1 bis 1:2.

4. Paste nach einem der vorhergehenden Ansprüche, **dadurch gekennzeichnet, dass** das Polyvinylbutyralharz ein Polyvinylbutyral mit einer gewichtsmittleren Molmasse M_{w} (g/mol) im Bereich von 30.000 bis 80.000, bevorzugt im Bereich von 40.000 bis 75.000 g/mol, besonders bevorzugt im Bereich von 45.000 bis 70.000 g/mol ist.

5. Paste nach einem der vorhergehenden Ansprüche, **dadurch gekennzeichnet, dass** als Solvent Blue 38 ein Dinatriumsalz von Solvent Blue 38, CAS 1328-51-4, enthalten ist.

6. Paste nach einem der vorhergehenden Ansprüche, **dadurch gekennzeichnet, dass** das Lösungsmittelgemisch zusätzlich ein Ethylenoxid-Propylenoxidestergemisch enthält.

7. Paste nach einem der vorhergehenden Ansprüche, **dadurch gekennzeichnet, dass** das Lösungsmittelgemisch zusätzlich einen β-alkylierten Alkohol mit einer Kettenlänge von 6 bis 12 C-Atomen, bevorzugt Octyldodecanol enthält.

8. Paste nach einem der vorhergehenden Ansprüche, **dadurch gekennzeichnet, dass** die Kugelschreiberpaste 5 bis 15 Gew.-% Farbstoff oder Farbstoffgemisch; 60 bis 85 Gew.-% Lösungsmittel oder Lösungsmittelgemisch; 5 bis 15 Gew.-% Polyvinylbutyral und ggf. 3 bis 10 Gew.-% Weichmacher enthält.

## Claims

1. A ballpoint pen paste containing
a) a colourant, which can be a pigment or a mixture of pigments, wherein at least one alkaline salt of Solvent Blue 38 is included,
b) a solvent or solvent mixture, wherein at least diacetone alcohol is included,
c) a polymer for adjusting the viscosity, which is a polyvinyl butyral resin.

2. A paste as claimed in Claim 1, **characterised in that** a plasticiser is additionally included selected from 1,2-cyclohexanedicarbonic acid diisononyl ester or esters based on adipic acid and polyvalent alcohols.

3. A paste as claimed in Claim 1 or 2, **characterised in that** a solvent mixture is included which includes diacetone alcohol and hexylene glycol in a ratio of 10:1 to 1:10, preferably 5:1 to 1:2.

4. A paste as claimed in one of the preceding claims, **characterised in that** the polyvinyl butyral resin is a polyvinyl butyral with a weight average molar mass M_{w} (g/mol) in the range of 30,000 to 80,000, preferably in the range of 40,000 to 75,000 g/mol, particularly preferably in the range of 45,000 to 70,000 g/mol.

5. A paste as claimed in one of the preceding claims, **characterised in that** a disodium salt of Solvent Blue 38, CAS 1328-51-4, is included as the Solvent Blue 38.

6. A paste as claimed in one of the preceding claims, **characterised in that** the solvent mixture additionally includes an ethylene oxide-propylene oxide ester mixture.

7. A paste as claimed in one of the preceding claims, **characterised in that** the solvent mixture additionally includes a β-alkylated alcohol with a chain length of 6 to 12 C atoms, preferably octyldodecanol.

8. A paste as claimed in one of the preceding claims, **characterised in that** the ballpoint pen paste includes 5 to 15 wt.% pigment or pigment mixture; 60 to 85 wt.% solvent or solvent mixture; 5 to 15 wt.% polyvinyl butyral and optionally 3 to 10 wt.% plasticiser.

## Revendications

1. Pâte pour stylo à bille, contenant
a) une matière colorante, qui peut être un colorant ou un mélange de colorants, sachant qu'elle contient au moins un sel alcalin de Solvent Blue 38,
b) un solvant ou un mélange de solvants, sachant qu'il contient au moins un alcool diacétonique,
c) un polymère pour régler la viscosité, qui est une résine de polyvinyle de butyral.

2. Pâte selon la revendication 1, **caractérisée en ce qu'**elle contient en outre un plastifiant sélectionné parmi le DINCH (1,2-cyclohexanedicarboxylic acid, diisononyl ester) ou des esters à base d'acide adipique et d'alcools polyvalents.

3. Pâte selon la revendication 1 ou la revendication 2, **caractérisée en ce qu'**elle contient un mélange de solvants qui présente de l'alcool diacétonique et du glycol héxylènique dans des proportions de 10:1 à 1:10, de préférence de 5:1 à 1:2.

4. Pâte selon l'une des revendications précédentes, **caractérisée en ce que** la résine de polyvinyle de butyral est un polyvinyle de butyral avec une masse molaire moyenne en poids M_{w} (g/mol) dans la plage de 30 000 à 80 000, de préférence dans la plage de 40 000 à 75 000 g/mol, d'une manière particulièrement préférée dans la plage de 45 000 à 70 000 g/mol.

5. Pâte selon l'une des revendications précédentes, **caractérisée en ce qu'**elle contient comme Solvent Blue 38 un sel disodique de Solvent Blue 38, CAS 1328-51-4.

6. Pâte selon l'une des revendications précédentes, **caractérisée en ce que** le mélange de solvants contient en outre un mélange d'ester d'oxyde de propylène et d'oxyde d'éthylène.

7. Pâte selon l'une des revendications précédentes, **caractérisée en ce que** le mélange de solvants contient en outre un alcool alcoylé en position bêta avec une longueur de chaîne de 6 à 12 atomes de carbone, de préférence du dodécanol octylique.

8. Pâte selon l'une des revendications précédentes, **caractérisée en ce que** la pâte pour stylo à bille contient 5 à 15 % en poids de colorant ou de mélange de colorants ; 60 à 85 % en poids de solvant ou de mélange de solvants ; 5 à 15 % en poids de polyvinyle de butyral et éventuellement 3 à 10 % en poids de plastifiant.
